# EUROPÄISCHE PATENTSCHRIFT

(11) **EP 3 818 198 B1**
(45) Veröffentlichungstag und Bekanntmachung des Hinweises auf die Patenterteilung: **26.07.2023**
(21) Anmeldenummer: 19729170.1
(22) Anmeldetag: 29.05.2019
(51) Int. Cl.: C25B 11/061, C25B 11/091, H01M 4/86, H01M 4/90, H01M 4/92, H01M 8/0232, C25B 1/04, C25B 1/30, H01M 4/96

(54) **KATALYSATORANORDNUNG FÜR EIN ELEKTROLYSEURSYSTEM ODER EIN BRENNSTOFFZELLENSYSTEM, ELEKTROLYSEURSYSTEM, BRENNSTOFFZELLENSYSTEM, VERWENDUNG EINER KATALYSATORANORDNUNG UND VERFAHREN ZUR HERSTELLUNG EINER KATALYSATORANORDNUNG**
CATALYTIC ARRANGEMENT FOR AN ELECTROLYZER SYSTEM OR A FUEL CELL SYSTEM, ELECTROLYZER SYSTEM, FUEL CELL SYSTEM, USE OF A CATALYTIC ARRANGEMENT AND METHOD FOR PRODUCING A CATALYTIC ARRANGEMENT
ENSEMBLE CATALYSEUR POUR UN SYSTÈME ÉLECTROLYSEUR OU UN SYSTÈME DE PILE À COMBUSTIBLE, SYSTÈME ÉLECTROLYSEUR, SYSTÈME DE PILE À COMBUSTIBLE, UTILISATION D'UN ENSEMBLE CATALYSEUR ET PROCÉDÉ DE PRODUCTION D'UN ENSEMBLE CATALYSEUR

(30) Priorität: 06.07.2018 DE 102018116373
(43) Veröffentlichungstag der Anmeldung: 12.05.2021
(73) Patentinhaber: Schaeffler Technologies AG & Co. KG, 91074 Herzogenaurach (DE)
(72) Erfinder: VIVEKANANTHAN, Jeevanthi, 91074 Herzogenaurach (DE); MUSAYEV, Yashar, 90425 Nürnberg (DE); SCHULZ, Edgar, 91094 Langensendelbach (DE); WEGENER, Moritz, 91058 Erlangen (DE); DOBRENIZKI, Ladislaus, 91315 Höchstadt (DE)
(86) Internationale Anmeldenummer: PCT/DE2019/100471
(87) Internationale Veröffentlichungsnummer: WO 2020/007392

(56) Entgegenhaltungen:
- WO-A1-2017/145646
- WO-A1-2018/070149
- DE-T2- 60 025 695
- JP-A- 2011 184 767
- JP-A- 2017 179 408
- US-A1- 2007 248 875
- US-A1- 2015 147 680

## Beschreibung

Die Erfindung betrifft eine Katalysatoranordnung für ein Elektrolyseursystem oder ein Brennstoffzellensystem, umfassend eine Katalysatorträgereinheit und eine Katalysatorschicht. Ferner betrifft die Erfindung ein Elektrolyseursystem zur Wasserspaltung und/oder Wasserstoffperoxid-Entwicklung und ein Brennstoffzellensystem zur Sauerstoff-Reduktions-Reaktion. Darüber hinaus betrifft die vorliegende Erfindung eine Verwendung einer Katalysatoranordnung als Teil eines Elektrolyseursystems zur Wasserspaltung und/oder Wasserstoffperoxid-Entwicklung oder als Teil eines Brennstoffzellensystems zur Sauerstoff-Reduktions-Reaktion. Des Weiteren betrifft die vorliegende Erfindung ein Verfahren zur Herstellung einer Katalysatoranordnung.

Derartige Katalysatoranordnungen sind bekannt und werden als Elektroden in Elektrolyseuren oder in Brennstoffzellen verwendet.

In Elektrolyseuren kommen dabei unter anderem Titan- oder Kohlenstoff-geträgerte Edelmetalle wie Ir, Ru oder Pt zum Einsatz. Weiterhin offenbart Kjartansdöttir et al., International Journal of Hydrogen Energy, 38 (2013), 9221 - 8231 die Verwendung von Nickel, Edelstahl oder mit nickelbasierten Legierungen beschichteten Edelstahlen als Elektrode. In Brennstoffzellen werden häufig Kohlenstoff-geträgerte Edelmetall-Katalysatoren verwendet.

Durch die Verwendung teurer Werkstoffe, insbesondere von Edelmetallen, sind derartige Katalysatoranordnungen jedoch häufig kostspielig. Auch die Langzeitstabilität und die Effizienz von Elektrolyseuren sowie Brennstoffzellen werden maßgeblich durch die verwendete Katalysatoranordnung bestimmt. Weiterentwicklungen in diesen Bereichen können daher die Kosten senken und ggf. die Effizienz steigern.

Die EP 3 422 451 A1 beschreibt eine mikrobielle Brennstoffzelle mit einer positiven Elektrode, die eine elektrisch leitfähige Schicht und eine darauf aufgebrachte poröse Schicht als Träger für einen Katalysator aufweist. Die elektrisch leitfähige Schicht ist vorzugsweise aus mindestens einem elektrisch leitenden metallischen Material der Gruppe umfassend Aluminium, Kupfer, Edelstahl, Nickel, Titan, gebildet. Alternativ kann die elektrisch leitfähige Schicht aus Kohlenstoff gebildet sein. Die poröse Schicht kann aus Kohlenstoffpapier oder Kohlenstofffilz gebildet sein. Der Katalysator weist ein Metall-dotiertes, Kohlenstoff-basiertes Material auf, wobei weiterhin eine Dotierung mit Nichtmetall-Elementen in Form von Stickstoff, Bor, Schwefel, Phosphor, vorhanden sein kann.

Die DE 600 25 695 T2 offenbart eine Elektrolysezelle mit einer bipolaren Elektrode. Die Elektrode umfasst ein Substrat und eine das Substrat bedeckende kompakte, durch einen Dotierstoff leitfähig gemachte Diamantschicht. Die Diamantschicht ist in einem CVD-Verfahren gebildet. Das Substrat weist als Wachstumskeine Diamantpartikel auf.

Die US 2007 / 248 875 A1 beschreibt eine Katalysatorschicht zur Verwendung an Membran-Elektroden-Einheiten von elektrochemischen Zellen, insbesondere Brennstoffzellen. Die Katalysatorschicht umfasst ein thermisch stabiles Substrat und einen darauf aufgebrachten katalytischen Film umfassend Kohlenstoff, Stickstoff und ein Übergangsmetall in Form von Eisen und/oder Kobalt. Der Film ist mittels physikalischer Dampfphasenabscheidung ausgebildet.

Die JP 2011 184 767 A beschreibt eine Gaserzeugungsvorrichtung umfassend einen photoelektrischen Wandler. Es ist unter anderem ein Katalysator aus Edelmetall auf einer Kohlenstoffmatrix vorhanden.

Die US 2015 / 147 680 A1 offenbart Komposit-Nanopartikel umfassend einen nanopartikulären Trägerkörper aus Kohlenstoff, auf welchem eine erste Phase aus Nanopartikeln in Form von Platin kondensiert ist, wobei ein PVD-Verfahren zum Einsatz kommt. Die Komposit-Nanopartikel kommen in Brennstoffzellen als Katalysator zum Einsatz.

Die WO 2018 / 070 149 A1 beschreibt ein Katalysatormaterial für eine Brennstoffzelle umfassend einen Träger aus Kohlenstoffpulver beschichtet mit Platin, Kobalt und Zirkon.

Die JP 2017 179 408 A offenbart ein Elektrodenmaterial für eine Elektrolysezelle umfassend ein leitfähiges Hilfsmaterial auf Kohlenstoffbasis, hier aus Fasermaterial, mit einem darauf aufgebrachten Oxidträger, hauptsächlich aus Zinnoxid, welcher seinerseits mit katalytisch aktiven Iridiumdioxidpartikeln beschichtet ist.

Vor diesem Hintergrund stellt sich die Aufgabe, eine korrosionsbeständige Katalysatoranordnung für ein Elektrolyseursystem oder ein Brennstoffzellensystem bereitzustellen, welche mit reduzierten Materialkosten herstellbar ist und/oder eine erhöhte Lebensdauer aufweist.

Die Aufgabe wird gelöst durch eine Katalysatoranordnung für ein Elektrolyseursystem oder ein Brennstoffzellensystem, umfassend eine Katalysatorträgereinheit und eine Katalysatorschicht, wobei die Katalysatorschicht eine Kohlenstoffmatrix mit einer metallischen, nichtmetallischen und/oder halbmetallischen Dotierung aufweist, wobei die Dotierung ein oder mehrere weitere Metalle aufweist und dass die Dotierung als eines oder mehrere weitere Metalle Aluminium (Al) und/oder Zinn (Sn) aufweist.

Erfindungsgemäß ist es dadurch möglich, eine in vorteilhafter Weise korrosionsbeständige Katalysatoranordnung bereitzustellen, die vergleichsweise kostensparend herstellbar ist, da auf größere Mengen teurer Werkstoffe, wie beispielsweise bestimmte Edelmetalle, verzichtet werden kann. Gleichzeitig kann, insbesondere durch die Verwendung einer erfindungsgemäßen Katalysatorschicht, eine verbesserte Langzeitstabilität erreicht werden. Die Katalysatorschicht hat dabei insbesondere die Funktion der Beschleunigung der Hin- und/oder Rückreaktionen (z. B. Wasser-Oxidation) und die Erhöhung der Reaktionsgeschwindigkeit (also eine Veränderung der Kinetik).

Insbesondere ist es denkbar, dass die Dotierung zwischen 0.1 Atom-% und 20 Atom-% der Katalysatorschicht bzw. Kohlenstoffmatrix ausmacht (bzw. einen solchen Anteil an der Katalysatorschicht bzw. Kohlenstoffmatrix hat).

Es ist bevorzugt denkbar, dass die Katalysatorschicht aus der dotierten Kohlenstoffmatrix besteht und keine weiteren (größeren) Mengen an weiteren (teuren) Werkstoffen enthält.

Die Kohlenstoffmatrix kann beispielsweise aus amorphem Kohlenstoff ausgebildet sein. Alternativ kann die Kohlenstoffmatrix als Graphitmatrix vorliegen. Beispielsweise kommen als Katalysatorschicht Triondur^{®}-Beschichtungen in Frage.

Gemäß einer Ausführungsform der vorliegenden Erfindung ist es denkbar, dass die Katalysatorträgereinheit eine Zwischenschicht umfasst, beispielsweise um die Haftvermittlung zur Katalysatorschicht zu verbessern.

Es ist erfindungsgemäß denkbar, dass die Katalysatorschicht mehrere Teilschichten umfasst. Beispielsweise können mehrere Teilschichten, jeweils auf Basis einer Kohlenstoffmatrix, übereinander angeordnet sein und unterschiedliche Dotierungen bzw. Dotierelemente aufweisen. Alternativ ist es denkbar, dass die Teilschichten gleiche Dotiereigenschaften aufweisen.

Erfindungsgemäß ist es bevorzugt vorgesehen, dass die Katalysatorschicht eine Deckschicht, also außen liegende Schicht, der Katalysatoranordnung ist. Somit ist es möglich, dass die katalytischen Eigenschaften sowie die Korrosionsbeständigkeit der Katalysatorschicht besonders vorteilhaft zum Tragen kommen.

Gemäß einer vorteilhaften Ausführungsform ist es vorgesehen, dass die Katalysatorträgereinheit Edelstahl aufweist. Es ist insbesondere denkbar, dass die Katalysatorträgereinheit zumindest im Wesentlichen aus einem Stahl, insbesondere Edelstahl, besteht.

Eine Ausführungsform der vorliegenden Erfindung sieht vor, dass die Katalysatorträgereinheit einen Schaum oder ein Netz, umfassend ein oder mehrere Übergangsmetalle der vierten bis sechsten Periode, aufweist. Es ist insbesondere denkbar, dass die Katalysatorträgereinheit aus einem Schaum oder Netz, zusammengesetzt aus einem oder mehreren Übergangsmetallen der vierten bis sechsten Periode, besteht.

Gemäß einer Ausführungsform der vorliegenden Erfindung ist es vorgesehen, dass die Dotierung ein oder mehrere Edelmetalle, insbesondere Ruthenium, Ru, Iridium, Ir, und/oder Platin, Pt, aufweist. Insbesondere ist es denkbar, dass das oder die Edelmetalle zwischen 0.1 Gew.-% und 2 Gew.-% der Katalysatorschicht bzw. Kohlenstoffmatrix ausmachen (bzw. einen solchen Anteil an der Katalysatorschicht bzw. Kohlenstoffmatrix haben). Besonders bevorzugt ist, dass die Dotierung Ruthenium und/oder Iridium aufweist.

Gemäß einer Ausführungsform ist es bevorzugt denkbar, dass die Dotierung ein oder mehrere Übergangsmetalle der vierten bis sechsten Periode, insbesondere Nickel, Ni, Mangan, Mn, Cobalt, Co, Eisen, Fe und/oder Molybdän, Mo, aufweist. Es ist bevorzugt möglich, dass das oder die Übergangsmetalle der vierten bis sechsten Periode zwischen 0.1 Atom-% und 5 Atom-% der Katalysatorschicht bzw. Kohlenstoffmatrix ausmachen (bzw. einen solchen Anteil an der Katalysatorschicht bzw. Kohlenstoffmatrix haben). Besonders bevorzugt ist, dass die Dotierung Nickel und/oder Mangan aufweist.

Insbesondere ist es denkbar, dass das oder die weiteren Metalle zwischen 0.1 Atom-% und 3 Atom-% der Katalysatorschicht bzw. Kohlenstoffmatrix ausmachen (bzw. einen solchen Anteil an der Katalysatorschicht bzw. Kohlenstoffmatrix haben).

Gemäß einer Ausführungsform der vorliegenden Erfindung ist es vorgesehen, dass die Dotierung ein oder mehrere Nichtmetalle und/oder ein oder mehrere Halbmetalle, insbesondere Schwefel, S, Phosphor, P, Stickstoff, N, Sauerstoff, O, und/oder Bor, B, aufweist. Denkbar ist insbesondere, dass das oder die Halbmetalle und/oder das oder die Nichtmetalle zwischen 0.1 Atom-% und 8 Atom-% der Katalysatorschicht bzw. Kohlenstoffmatrix ausmachen (bzw. einen solchen Anteil an der Katalysatorschicht bzw. Kohlenstoffmatrix haben). Besonders bevorzugt ist, dass die Dotierung Stickstoff und/oder Sauerstoff aufweist.

Ein weiterer Gegenstand der vorliegenden Erfindung ist ein Elektrolyseursystem zur Wasserspaltung und/oder Wasserstoffperoxid-Entwicklung, dadurch gekennzeichnet, dass das Elektrolyseursystem eine Katalysatoranordnung nach einer Ausführungsform der vorliegenden Erfindung umfasst.

Es ist dadurch erfindungsgemäß in vorteilhafter Weise möglich, ein Elektrolyseursystem mit einer erhöhten Langzeitstabilität bereitzustellen und gleichzeitig die Verwendung von kostspieligen Materialkomponenten wie Edelmetallen zu reduzieren. Somit können Sauerstoff- und Wasserstoff-Entwicklungs-Reaktionen (OER und HER)) sowie Wasserstoffperoxid-Entwicklungsreaktion besonders effizient durchgeführt werden.

Ein weiterer Gegenstand der vorliegenden Erfindung ist ein Brennstoffzellensystem zur Sauerstoff-Reduktions-Reaktion, dadurch gekennzeichnet, dass das Brennstoffzellensystem eine Katalysatoranordnung nach einer Ausführungsform der vorliegenden Erfindung umfasst.

Es ist dadurch in vorteilhafter Weise möglich, ein Brennstoffzellensystem mit einer erhöhten Langzeitstabilität bereitzustellen und gleichzeitig die Verwendung von kostspieligen Materialkomponenten wie Edelmetallen zu reduzieren, was eine effiziente Durchführung von Sauerstoff-Reduktions-Reaktionen(ORR) ermöglicht.

Zur Lösung der eingangs genannten Aufgabe wird ferner eine Verwendung einer Katalysatoranordnung gemäß einer Ausführungsform der vorliegenden Erfindung als Teil eines Elektrolyseursystems zur Wasserspaltung und/oder Wasserstoffperoxid-Entwicklung oder als Teil eines Brennstoffzellensystems zur Sauerstoff-Reduktions-Reaktion vorgeschlagen.

Darüber hinaus wird zur Lösung der eingangs genannten Aufgabe ein Verfahren zur Herstellung einer Katalysatoranordnung nach einer Ausführungsform der vorliegenden Erfindung vorgeschlagen, dadurch gekennzeichnet, dass die Katalysatorschicht auf der Katalysatorträgereinheit mithilfe einer physikalischen Gasphasenabscheidung oder einer chemischen Beschichtungsmethode abgeschieden wird.

Ferner können auch die um Zusammenhang mit der Katalysatoranordnung erläuterten vorteilhaften Ausgestaltungen, Ausführungsformen und Merkmale allein oder in Kombination bei dem Elektrolyseursystem, dem Brennstoffzellensystem, der Verwendung einer Katalysatoranordnung und bei dem Verfahren zur Herstellung einer Katalysatoranordnung Anwendung finden.

Weitere Einzelheiten und Vorteile der Erfindung sollen nachfolgend anhand des in der Zeichnung dargestellten Ausführungsbeispiels erläutert werden. Hierin zeigt:

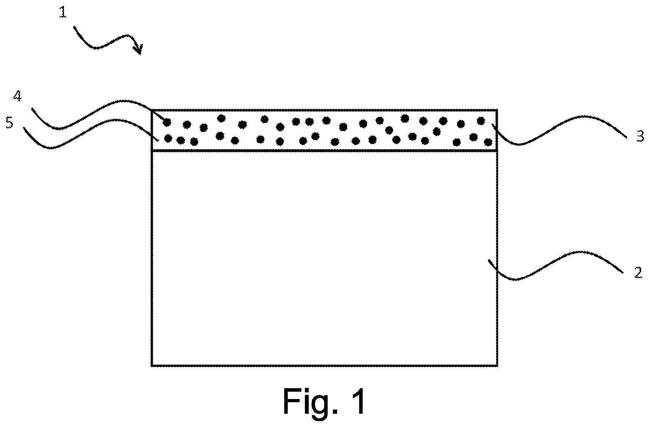

- Fig. 1: ein Ausführungsbeispiel einer erfindungsgemäßen Katalysatoranordnung für ein Elektrolyseursystem oder ein Brennstoffzellensystem in einer schematischen Darstellung.

In der **Fig. 1** ist ein Ausführungsbeispiel einer erfindungsgemäßen Katalysatoranordnung 1 gezeigt, die als Elektrode in einem Elektrolyseursystem oder als Teil eines Brennstoffzellensystems verwendet werden kann. Die Katalysatoranordnung 1 umfasst eine Katalysatorträgereinheit 2 und eine Katalysatorschicht 3. Die Katalysatorträgereinheit 2 kann beispielsweise aus einem Edelstahl gefertigt sein oder aus einem Schaum oder Netz, umfassend ein oder mehrere Übergangsmetalle der vierten bis sechsten Periode, bestehen. Oberhalb der Katalysatorträgereinheit 2 ist die Katalysatorschicht 3 angeordnet. Diese stellt typischerweise den außenliegenden Teil der Katalysatoranordnung 1 dar, ist also an ihrer von der Katalysatorträgereinheit 2 abgewandten Seite freistehend und kann somit in Kontakt mit Fluiden gebracht werden. Die dargestellte Katalysatorschicht 3 besteht im Wesentlichen aus einer Kohlenstoffmatrix 5 mit einer Dotierung 4. Erfindungsgemäß umfasst die Dotierung ein oder mehrere weitere Metalle in Form von Aluminium und/oder Zinn. Es ist denkbar, dass die Katalysatorschicht 3 mehrere Teilschichten umfasst, also als Schichtsystem ausgebildet ist. Die Dotierung 4 kann Metalle, Halbmetalle und/oder Nichtmetalle umfassen. Beispielsweise kann die Dotierung 4 ein oder mehrere Edelmetalle, wie Ruthenium, Iridium und/oder Platin, aufweisen. Alternativ oder zusätzlich kann die Dotierung ein oder mehrere Übergangsmetalle der vierten bis sechsten Periode, wie Nickel, Mangan, Cobalt, Eisen und/oder Molybdän, aufweisen. Alternativ oder zusätzlich kann die Dotierung ein oder mehrere Nichtmetalle und/oder ein oder mehrere Halbmetalle, wie Schwefel, Phosphor, Stickstoff, Sauerstoff und/oder Bor aufweisen.

Es ist denkbar, dass die Katalysatorträgereinheit 2 eine oder mehrere Zwischenschichten angrenzend an die Katalysatorschicht 3 umfasst (nicht dargestellt).

Vorstehend ist ein Ausführungsbeispiel einer Katalysatoranordnung 1 für ein Elektrolyseursystem oder ein Brennstoffzellensystem, umfassend eine Katalysatorträgereinheit 2 und eine Katalysatorschicht 3, beschrieben, wobei die Katalysatorschicht 3 eine Kohlenstoffmatrix 5 mit einer metallischen, nichtmetallischen und/oder halbmetallischen Dotierung 4 aufweist.

### Bezugszeichenliste:

- 1: Katalysatoranordnung
- 2: Katalysatorträgereinheit
- 3: Katalysatorschicht
- 4: Dotierung
- 5: Kohlenstoffmatrix

## Patentansprüche

1. Katalysatoranordnung (1) für ein Elektrolyseursystem oder ein Brennstoffzellensystem, umfassend eine Katalysatorträgereinheit (2) und eine Katalysatorschicht (3), wobei die Katalysatorschicht (3) eine Kohlenstoffmatrix (5) mit einer metallischen, nichtmetallischen und/oder halbmetallischen Dotierung (4) aufweist **dadurch gekennzeichnet, dass** die Dotierung (4) ein oder mehrere weitere Metalle aufweist und dass die Dotierung (4) als eines oder mehrere weitere Metalle Aluminium (Al) und/oder Zinn (Sn) aufweist.

2. Katalysatoranordnung (1) nach Anspruch 1, **dadurch gekennzeichnet, dass** die Katalysatorträgereinheit (2) Edelstahl aufweist.

3. Katalysatoranordnung (1) nach einem der vorherigen Ansprüche, **dadurch gekennzeichnet, dass** die Katalysatorträgereinheit (2) einen Schaum oder ein Netz, umfassend ein oder mehrere Übergangsmetalle der vierten bis sechsten Periode, aufweist.

4. Katalysatoranordnung (1) nach einem der vorherigen Ansprüche, **dadurch gekennzeichnet, dass** die Dotierung (4) ein oder mehrere Edelmetalle, insbesondere Ruthenium, Ru, Iridium, Ir, und/oder Platin, Pt, aufweist.

5. Katalysatoranordnung (1) nach einem der vorherigen Ansprüche, **dadurch gekennzeichnet, dass** die Dotierung (4) ein oder mehrere Übergangsmetalle der vierten bis sechsten Periode, insbesondere Nickel, Ni, Mangan, Mn, Cobalt, Co, Eisen, Fe und/oder Molybdän, Mo, aufweist.

6. Katalysatoranordnung (1) nach einem der vorherigen Ansprüche, **dadurch gekennzeichnet, dass** die Dotierung (4) ein oder mehrere Nichtmetalle und/oder ein oder mehrere Halbmetalle, insbesondere Schwefel, S, Phosphor, P, Stickstoff, N, Sauerstoff, O, und/oder Bor, B, aufweist.

7. Elektrolyseursystem zur Wasserspaltung und/oder Wasserstoffperoxid-Entwicklung, **dadurch gekennzeichnet, dass** das Elektrolyseursystem eine Katalysatoranordnung (1) nach einem der vorherigen Ansprüche umfasst.

8. Brennstoffzellensystem zur Sauerstoff-Reduktions-Reaktion, **dadurch gekennzeichnet, dass** das Brennstoffzellensystem eine Katalysatoranordnung (1) nach einem der Ansprüche 1 bis 6 umfasst.

9. Verwendung einer Katalysatoranordnung (1) gemäß einem der Ansprüche 1 bis 6 als Teil eines Elektrolyseursystems zur Wasserspaltung und/oder Wasserstoffperoxid-Entwicklung oder als Teil eines Brennstoffzellensystems zur Sauerstoff-Reduktions-Reaktion.

10. Verfahren zur Herstellung einer Katalysatoranordnung (1) nach einem der Ansprüche 1 bis 6, **dadurch gekennzeichnet, dass** die Katalysatorschicht (3) auf der Katalysatorträgereinheit (2) mithilfe einer physikalischen Gasphasenabscheidung oder einer chemischen Beschichtungsmethode abgeschieden wird.

## Claims

1. A catalytic arrangement (1) for an electrolyzer system or a fuel cell system, comprising a catalyst support unit (2) and a catalyst layer (3), wherein the catalyst layer (3) has a carbon matrix (5) with a metal, non-metal and/or semi-metal doping (4), **characterised in that** the doping (4) has one or more further metals, and **in that** the doping (4) has aluminium (Al) and/or tin (Sn) as one or more further metals.

2. The catalytic arrangement (1) according to claim 1, **characterized in that** the catalyst support unit (2) has stainless steel.

3. The catalytic arrangement (1) according to any one of the preceding claims, **characterized in that** the catalyst support unit (2) has a foam or a mesh, comprising one or more transition metals of the fourth to sixth period.

4. The catalytic arrangement (1) according to any one of the preceding claims, **characterized in that** the doping (4) has one or more stainless metals, in particular ruthenium (Ru), iridium (1r), and/or platinum (Pt).

5. The catalytic arrangement (1) according to any one of the preceding claims, **characterized in that** the doping (4) has one or more transition metals of the fourth to sixth period, in particular nickel (Ni), manganese (Mn), cobalt (Co), iron (Fe) and/or molybdenum (Mo).

6. The catalytic arrangement (1) according to any one of the preceding claims, **characterized in that** the doping (4) has one or more non-metals and/or one or more semi-metals, in particular sulphur (S), phosphorus (P), nitrogen (N), oxygen (O) and/or boron (B).

7. An electrolyzer system for water splitting and/or hydrogen peroxide development, **characterized in that** the electrolyzer system comprises a catalytic arrangement (1) according to any one of the preceding claims.

8. A fuel cell system for an oxygen reduction reaction, **characterized in that** the fuel cell system comprises a catalytic arrangement (1) according to any one of claims 1 to 6.

9. A use of a catalytic arrangement (1) according to any one of claims 1 to 6 as part of an electrolyzer system for water splitting and/or for hydrogen peroxide development or as part of a fuel cell system for an oxygen reduction reaction.

10. A method for producing a catalytic arrangement (1) according to any one of claims 1 to 6, **characterized in that** the catalytic layer (3) is deposited on the catalyst support unit (2) with the aid of a physical gas phase deposition or a chemical coating method.

## Revendications

1. Ensemble catalyseur (1) pour un système électrolyseur ou un système de pile à combustible, comprenant une unité de support de catalyseur (2) et une couche de catalyseur (3), dans lequel la couche de catalyseur (3) présente une matrice de carbone (5) avec un dopage métallique, non métallique ou semi-métallique (4) **caractérisé en ce que** le dopage (4) présente un ou plusieurs autres métaux et **en ce que** le dopage (4) présente, en guise d'un ou plusieurs autres métaux, de l'aluminium (Al) et/ou de l'étain (Sn).

2. Ensemble catalyseur (1) selon la revendication 1, **caractérisé en ce que** l'unité de support de catalyseur (2) présente de l'acier inoxydable.

3. Ensemble catalyseur (1) selon l'une quelconque des revendications précédentes, **caractérisé en ce que** l'unité de support de catalyseur (2) présente une mousse ou un réseau, comprenant un ou plusieurs métaux de transition de la quatrième à la sixième période.

4. Ensemble catalyseur (1) selon l'une quelconque des revendications précédentes, **caractérisé en ce que** le dopage (4) présente un ou plusieurs métaux précieux, en particulier le ruthénium, Ru, l'iridium, Ir, et/ou le platine, Pt.

5. Ensemble catalyseur (1) selon l'une quelconque des revendications précédentes, **caractérisé en ce que** le dopage (4) présente un ou plusieurs métaux de transition de la quatrième à la sixième période, en particulier le nickel, Ni, le manganèse, Mn, le cobalt, Co, le fer, Fe et/ou le molybdène, Mo.

6. Ensemble catalyseur (1) selon l'une quelconque des revendications précédentes, **caractérisé en ce que** le dopage (4) présente un ou plusieurs non-métaux et/ou un ou plusieurs semi-métaux, en particulier le soufre, S, le phosphore, P, l'azote, N, l'oxygène, O, et/ou le bore, B.

7. Système électrolyseur pour la décomposition de l'eau et/ou le développement du peroxyde d'hydrogène, **caractérisé en ce que** le système électrolyseur comprend un ensemble catalyseur (1) selon l'une quelconque des revendications précédentes.

8. Système de pile à combustible pour la réaction de réduction de l'oxygène, **caractérisé en ce que** le système de pile à combustible comprend un ensemble catalyseur (1) selon l'une quelconque des revendications 1 à 6.

9. Utilisation d'un ensemble catalyseur (1) selon l'une quelconque des revendications 1 à 6 en guise de partie d'un système électrolyseur pour la décomposition de l'eau et/ou le développement du peroxyde d'hydrogène ou en guise de partie d'un système de pile à combustible pour une réaction de réduction de l'oxygène.

10. Procédé de production d'un ensemble catalyseur (1) selon l'une quelconque des revendications 1 à 6, **caractérisé en ce que** la couche de catalyseur (3) est déposée sur l'unité de support de catalyseur (2) à l'aide d'un dépôt physique en phase vapeur ou d'une méthode de revêtement chimique.
